# EUROPEAN PATENT SPECIFICATION

(11) **EP 4 699 068 B1**
(45) Date of publication and mention of the grant of the patent: **22.07.2026**
(21) Application number: 24755307.6
(22) Date of filing: 14.08.2024
(51) Int. Cl.: G06Q 20/22, G06Q 20/32, G06Q 20/36, G06Q 20/40

(54) **INITIATING AND COMPLETING AN ELECTRONIC TRANSACTION**
EINLEITUNG UND VERVOLLSTÄNDIGUNG EINER ELEKTRONISCHEN TRANSAKTION
INITIATION ET ACHÈVEMENT D'UNE TRANSACTION ÉLECTRONIQUE

(30) Priority: 01.07.2024 EP 24382708
(43) Date of publication of application: 25.02.2026
(73) Proprietor: Veridas Digital Authentication Solutions, S.L., 31192 Tajonar (ES)
(72) Inventor: AZANZA LADRÓN, Eduardo, 31192 Tajonar (ES); SÁNCHEZ YOLDI, Miguel Ángel, 31192 Tajonar (ES); LOPEZ JARA, Fausto Enrique, 31192 Tajonar (ES); SAN AGUSTÍN, Javier, 31192 Tajonar (ES); RUIZ ARANGUREN, Javier, 31192 Tajonar (ES); ARANA REMÍREZ, Carlos, 31192 Tajonar (ES)
(74) Representative: ZBM Patents - Zea, Barlocci & Markvardsen
(86) International application number: PCT/EP2024/072938
(87) International publication number: WO 2026/008163

(56) References cited:
- EP-A1- 3 040 922
- CN-B- 109 302 284
- US-A1- 2007 094 152
- US-A1- 2014 143 155
- US-A1- 2019 205 865
- US-A1- 2019 362 325
- US-A1- 2022 067 720
- US-A1- 2023 060 707
- US-A1- 2023 368 180
- US-B2- 11 961 079

## Description

This application claims the benefit of European Patent Application EP24382708.6 filed 01 July 2024.

The present disclosure relates to methods, systems and computer programs for initiating, at a computing device, an electronic transaction from a sender using or having the computing device to a receiver using or having a computer system communicatively coupled or couplable with the computing device. The present disclosure further relates to methods, systems and computer programs for completing said electronic transaction initiated at the computing device.

### BACKGROUND

Completion of certain electronic transactions initiated, or to be initiated, by a person currently require several steps including, e.g., provision of data to confirm that the electronic transaction is allowed to the person or what conditions apply in each case depending on the provided data. This data to be provided to initiate the electronic transaction may include, e.g., data directed to fulfil legal requirements, requirements of exclusivity through membership, discount or benefit attribution requirements, etc.

Legal requirements may relate to, e.g., person's age above or below an age threshold or within or outside an age range, municipality/state/country of birth/residence, disability level, etc. Requirements of exclusivity through membership may relate to, e.g., person's belonging to a certain collective such as a club or company or organisation via, e.g., an active subscription, active membership, etc. Discount or benefit attribution/applicability requirements may relate to, e.g., a person's condition that makes he or she eligible to receive some kind of benefit or discount or advantageous measure in a scenario of, e.g., special offers for students, veterans, seniors, large families, etc.

Therefore, current manners of carrying out electronic transactions may be cumbersome and, therefore, imply inefficiencies in the performing of the transaction from start to end. It is also a concern to minimize or at least attenuate as much as possible the risk of fraud in current manners of performing electronic transactions.

US2022/067720A1 discloses an offline payment method wherein verifiable data of the payer and payment source data are retrieved from the storage of a computing device.

US2014/143155A1 relates to an electronic payment method wherein an authentication device which stores authentication data in two different memories.

US11961079B2 relates to an age verification method wherein a mobile device stores age-related data of a payer in a secure element and a device PAN in a digital wallet application.

An object of this disclosure is thus to provide new methods, systems and computer programs aimed at improving prior art manners of initiating and of completing an electronic transaction or, in other words, of performing the electronic transaction from start to end.

### SUMMARY

In an aspect, methods are provided of initiating an electronic transaction at a computing device, from a sender using or having the computing device to a receiver using or having a computer system communicatively coupled or couplable with the computing device. The electronic transaction has one or more transaction conditions. The computing device has a service application installed thereon. These methods (also denominated initiating methods herein) comprise a multi-step procedure.

The multi-step procedure includes retrieving, by the service application, verifiable data or attributes of the sender from a first electronic storage in the computing device, said sender's verifiable data corresponding to identity attributes of the sender. This functionality may be denominated first retrieving functionality herein.

The multi-step procedure further includes retrieving, by the service application, verifiable data or attributes of a payment source of the sender from a second electronic storage in the computing device, said payment source's verifiable data corresponding to attributes of the sender's payment source. This functionality may be denominated second retrieving functionality herein.

The multi-step procedure still further includes forming, by the service application, a data structure including or representing at least part of the retrieved sender's verifiable data and the retrieved payment source's verifiable data. This functionality may be denominated forming functionality herein.

The multi-step procedure yet further includes performing, by the service application, a one-shot transmission of the data structure to the receiver's computer system to automatically complete the initiated electronic transaction, at or via the receiver's computer system, depending on the payment source's attributes and on whether and which of the transaction conditions are fulfilled by the sender's identity attributes. This functionality may be denominated transmitting functionality herein.

Verifiable data/attributes may be defined herein as data/attributes, normally structured according to some kind of pre-existing standard or norm to represent said type of verifiable data/attributes, while allowing these data/attributes to be verifiable against official records or authorities. Verifiable data/attributes of the sender may refer to identity attributes of a person who is acting as the sender in initiating methods according to present disclosure. Verifiable data/attributes of the sender's payment source may refer to attributes characterizing or contributing to characterize a payment source of the sender in initiating methods according to present disclosure. A payment source may be defined herein as an electronic deposit of money or electronic financial credit product to which amounts related to operations involving some type of payment can be charged. Examples of payment sources may be, e.g., bank accounts, debit cards, credit cards, account details for peer-to-peer (p2p) payment platforms, etc.

Initiating methods described above permit performing electronic transactions more efficiently and securely in comparison to current manners of doing so. Since the attributes of both the sender and his/her payment source are verifiable against official records, the electronic transaction is less prone to fraud (i.e., more secure) and, in turn, more efficient since both types of the verifiable attributes are transmitted to the receiver's computer system through a one-shot transmission, i.e., at once.

In relation to the aforementioned verifiability against official records, it is noted that in e-wallet based approaches (described in other parts of the disclosure), verification of verifiable data/attribute(s) or credential(s) may be performed without completing these checks against official records. Such a verification may be done based on cryptographic means, for example to verify that verifiable data/attribute(s) or credential(s) was/were issued by a trusted issuer and has/have not been modified. Such a verification may also involve checking, against some kind of record, that verifiable data/attribute(s) or credential(s) has/have not been revoked after its issuance. Another performable checking may be that verifiable data/attribute(s) or credential(s) follow corresponding established standard. A further performable checking may involve "holder binding" to verify that the user/sender initiating the electronic transaction possesses the private key corresponding to the public key associated with the verifiable data/attribute(s) or credential(s).

Initiating methods may furthermore comprise receiving, by the service application, a start request from the receiver's computer system and, in said case, initiating the multi-step procedure in response to the receiving of the start request.

Initiating methods may still furthermore comprise receiving, by the service application, sender's input or action to accept the start request and, in said case, initiating the multi-step procedure in response to the receiving of the start request and its acceptance by the sender.

The start request may further include, in some implementations, a type of authentication to be performed by the sender at the computing device, and the sender's input or action to accept the start request may include performing by the sender said type of requested authentication. And accordingly, the data structure formed by the service application may further include or represent verifiable data or attributes on said authentication performed by the sender.

In some examples, the start request may include parameters of the electronic transaction which may be displayed or displayable at the sender's computing device in either only-accept mode or select-update mode or non-update-preselect mode or update-preselect mode. The only-accept mode means that the electronic transaction's parameters are displayed in read-only manner so that the parameters are checkable (by the sender) prior to the (sender's) acceptance input. The select-update mode means that the electronic transaction's parameters are displayed in selectable/updatable manner, so that at least some of the parameters can be selected/updated (by the sender) prior to the (sender's) acceptance input. The non-update-preselect mode means that the electronic transaction's parameters are displayed in read-only but pre-selectable so that, previously to the (sender's) acceptance input, at least some of the parameters are automatically selectable according to preselection criteria stored in the (sender's) computing device. The update-preselect mode is equal to the non-update-preselect mode but with single difference that, once preselected according to preselection criteria, the electronic transaction's parameters are displayed in selectable/updatable manner.

These different modes of preparing or pre-handling the initiation of the electronic transaction make it more flexible in comparison to known manners of doing so. Efficiency may also be selectively added to the initiation of the electronic transaction thanks to these different modes, since selecting one or another of them may reduce the need of sender's inputs or actions that may be required in other known methods with same or similar purpose. For example, if the sender has clear which attributes wants to share in all or most electronic transactions, he/she can preselect said attributes in the service application only once and use the non-update-preselect mode every time, thereby avoiding to select attributes in the select-update mode or the update-preselect mode.

The electronic transaction's parameters may be encoded in a one-dimensional (1D) or two-dimensional (2D) bar code included in the start request. The 2D bar code may, e.g., a Quick Response (QR) code. In this 1D/2D bar code based approach, the sender's input or action to accept the start request may include scanning and decoding of the 1D or 2D bar code, so that the electronic transaction's parameters, once decoded, are displayed or displayable at the sender's computing device in either the only-accept mode or the select-update mode or the non-update-preselect mode or the update-preselect mode. In this bar code based approach, such a manner of presenting electronic transaction's parameters may also add even more efficiency and security to the initiation of the electronic transaction.

The displayed electronic transaction's parameters may indicate which of the sender's identity attributes are required by the electronic transaction or recommended to perform the electronic transaction. Responsive to sender's acceptance input in the only-accept mode, the retrieving of the sender's verifiable data may include retrieving, by the service application from the first electronic storage, sender's verifiable data corresponding to the required sender's identity attributes. Alternatively, responsive to sender's selection/update and acceptance input in the select-update mode, the retrieving of the sender's verifiable data may include retrieving, by the service application from the first electronic storage, sender's verifiable data corresponding to the selected/updated sender's identity attributes. Further alternatively, responsive to automatic preselection and sender's acceptance input in the non-update-preselect mode, the retrieving of the sender's verifiable data may include retrieving, by the service application from the first electronic storage, sender's verifiable data corresponding to the automatically preselected sender's identity attributes. Still further alternatively, responsive to automatic preselection and subsequent sender's selection/update and sender's acceptance input in the update-preselect mode, the retrieving of the sender's verifiable data may include retrieving, by the service application from the first electronic storage, sender's verifiable data corresponding to the automatically preselected and subsequently selected/updated sender's identity attributes.

The displayed electronic transaction's parameters may indicate which of the payment source's attributes are required by the electronic transaction or recommended to perform the electronic transaction. Responsive to sender's acceptance input in the only-accept mode, the retrieving of the payment source's verifiable data may include retrieving, by the service application from the second electronic storage, payment source's verifiable data corresponding to the required payment source's attributes. Alternatively, responsive to sender's selection/update and acceptance input in the select-update mode, the retrieving of the payment source's verifiable data may include retrieving, by the service application from the second electronic storage, payment source's verifiable data corresponding to the selected/updated payment source's attributes. Further alternatively, responsive to automatic preselection and sender's acceptance input in the non-update-preselect mode, the retrieving of the payment source's verifiable data may include retrieving, by the service application from the second electronic storage, payment source's verifiable data corresponding to the automatically preselected payment source's attributes. Still further alternatively, responsive to automatic preselection and subsequent sender's selection/update and sender's acceptance input in the update-preselect mode, the retrieving of the payment source's verifiable data may include retrieving, by the service application from the first electronic storage, payment source's verifiable data corresponding to the automatically preselected and subsequently selected/updated payment source's attributes.

In exemplary implementations, the service application in the sender's computing device (or installed thereon) may be an electronic wallet or e-wallet application which, in some examples, may include the first and the second electronic storages. Alternatively, the first and the second electronic storages may not be included in the service (e.g., wallet) application, in which case, proper secure connection(s) between the service (e.g., e-wallet) application and the first and the second electronic storages may be implemented in the sender's computing device. The first and the second electronic storages may be, in some examples, a single storage storing both the sender's verifiable data and the payment source's verifiable data. Such an e-wallet based approach may provide advantages mainly in the form of ease and speed of operation and, therefore, efficiency. Moreover, in e-wallet systems or applications, security is greatly ensured in such a manner that users' (i.e., sender's) private information is never compromised, by utilizing many layers of security, including tokenization and other forms of encryption.

In some configurations, the sender's verifiable data may be or may include sender's verifiable credentials corresponding to the sender's identity attributes, and/or the payment source's verifiable data may be or may include payment source's verifiable credentials corresponding to the payment source's attributes. Similarly as suggested in reference to the concept of verifiable data/attributes, verifiable credentials may be defined as a cryptographically secure, tamper-evident and machine-verifiable mode of digital verification. Verifiable credentials may hold the potential to provide a high security and confidentiality in digital identity management, fostering a safer and more trustworthy digital ecosystem for everyone.

The sender's identity attributes may comprise simple identity attributes and complex identity attributes. The concept of simple identity attribute may be defined as sender's attribute denoting or representing a single personal feature characterizing or contributing to characterize the sender's identity. The concept of complex identity attribute may be defined as sender's attribute which is or includes a composition of logically related items characterizing or contributing to characterize the sender's identity. Each of said items may be a simple identity attribute, or a threshold, or a nested complex identity attribute, or any personal condition characterizing or contributing to characterize the sender's identity. A simple identity attribute may be, e.g., sender's age. A complex identity attribute may be, e.g., a logical formulation of an attestation of sender's age is greater than (or less than) a given age threshold.

The payment source's attributes may comprise identification attributes and, optionally, authorization attributes. Such identification attributes may be those identifying or contributing to identify the payment source, so that the effecting of the electronic transaction is performable directly or indirectly against the payment source through its identification attributes. The authorization attributes may be those defining or contributing to define authorization to directly or indirectly operate the payment source under predefined conditions, so that the effecting of the electronic transaction is performable directly or indirectly against the payment source restricted to the predefined conditions. Payment source's identification attributes may be, e.g., card number, expiry and CVV (Card Verification Value) code. Payment source's authorization attributes may be, e.g., a maximum amount chargeable predefined by the sender in the service application (e.g., e-wallet).

In a short-range or short-distance or in-store scenario, the sender's computing device and the receiver's computer system may be communicatively coupled or couplable with each other through a short range or short distance wireless communication technology. Any data exchange between the sender's computing device and the receiver's computer system may thus be performed through said short range or short distance wireless communication technology. In examples, the short range or short distance wireless communication technology may be or include one of Bluetooth, infrared, near field communication (NFC), ultra-band, Zigbee.

In a remote communication scenario, the sender's computing device and the receiver's computer system may be communicatively coupled or couplable with each other through a mobile or non-mobile communication network such as, .e.g., the Internet or mobile Internet.

In a further aspect, systems are provided for initiating an electronic transaction at a computing device, from a sender using or having the computing device to a receiver using or having a computer system communicatively coupled or couplable with the computing device. The electronic transaction may have one or more transaction conditions. Such systems (also denominated initiating systems herein) comprise a multi-module system including a first retriever module, a second retriever module, a forming module and a transmitter module. The first retriever module may be configured to perform the first retrieving functionality as previously defined in relation to initiating methods. The second retriever module may be configured to perform the second retrieving functionality as previously defined in relation to initiating methods. The forming module may be configured to perform the forming functionality as previously defined in relation to initiating methods. The transmitter module may be configured to perform the transmitting functionality as previously defined in relation to initiating methods. In some examples, the service application may be or may be included in one of the initiating systems disclosed herein.

Initiating systems are suitable or configured to perform initiating methods described in other parts of the disclosure, so same or similar functional principles and advantages as the ones described with reference to initiating methods may be similarly attributed to such initiating systems.

In a still further aspect, computer programs are provided comprising computer program code means adapted to perform all the steps of (initiating) methods of initiating an electronic transaction at a computing device, such as those described in other parts of the disclosure. These computer programs (also denominated initiating computer programs herein) may be embodied on a computer readable medium and/or carried on a carrier signal. Initiating computer programs are suitable or configured to perform initiating methods proposed herein, so same or similar functional fundamentals and advantages as the ones described with reference to initiating methods may be similarly attributed to such initiating computer programs. In some implementations, the service application may be or may be included in one of the initiating computer programs disclosed herein.

In a yet further aspect, computing systems are provided for initiating an electronic transaction, said computing systems comprising a memory and a processor, embodying instructions stored in the memory and executable by the processor, and the instructions comprising functionality or functionalities to execute (initiating) methods of initiating an electronic transaction at a computing device such as those described in other parts of the disclosure. Such computing systems (also denominated initiating computing systems herein) are suitable or configured to perform initiating methods described herein, so same or similar functional principles and advantages as the ones described with reference to initiating methods may be similarly attributed to such initiating computing systems. In some configurations, the service application may be or may be included in one of the initiating computing systems disclosed herein.

In a furthermore aspect, methods are provided of completing an electronic transaction initiated at a computing device, the electronic transaction being from a sender using or having the computing device to a receiver using or having a computer system communicatively coupled or couplable with the computing device. The electronic transaction has one or more transaction conditions. The computer system has a support application installed thereon. These methods may also be denominated completing methods herein.

Completing methods comprise receiving, by the support application from the sender's computing device, a one-shot transmission of a data structure including or representing verifiable data or attributes of the sender and verifiable data or attributes of a payment source of the sender, the sender's verifiable data corresponding to identity attributes of the sender, and the payment source's verifiable data corresponding to attributes of the sender's payment source. This functionality may be denominated receiving functionality herein.

Completing methods further comprise effecting the electronic transaction, by or via the support application, depending on the payment source's attributes and on whether and which of the transaction conditions are fulfilled by the sender's identity attributes. This functionality may be denominated effecting functionality herein.

Such completing methods are one part of a plug and socket configuration further including initiating methods (according to present disclosure) that are a further part of said configuration, so that the one part (one of the plug and socket parts) and the further part (the other of the plug and socket parts) cooperate together to perform whole electronic transactions. Therefore, benefits and advantages of completing methods are clear, taking into account that they form part of said plug and socket configuration along with initiating methods.

The effecting of the electronic transaction may include performing, by or via the support application, an evaluation of whether and which of the transaction conditions are fulfilled by the sender's identity attributes, so as to determine that a reduction is applicable or not applicable to a total amount of the electronic transaction, and processing, by or via the support application, the electronic transaction according to the total amount with or without reduction as determined in the previously performed evaluation.

In a charge-refund approach, the processing of the electronic transaction may include performing, by or via the support application, a charge of the total amount on the sender's payment source based on the payment source's attributes and, in case of having determined that reduction is applicable, performing by or via the support application, a refund of the determined reduction on the sender's payment source based on the payment source's attributes.

According to the charge-refund approach, the processing of the electronic transaction may include a full-refund notification functionality or a partial-refund notification functionality or a no-refund notification functionality.

The full-refund notification functionality may include, in case that the refunded amount is equal to the charged amount, transmitting by or via the support application to the sender's computing device, a result of the electronic transaction indicating that the electronic transaction has been completed with full refund.

The partial-refund notification functionality may include, in case that the refunded amount is below the charged amount, transmitting by or via the support application to the sender's computing device, a result of the electronic transaction indicating that the electronic transaction has been completed with partial refund.

The no-refund notification functionality may include, in case of having determined that no reduction is applicable, transmitting by or via the support application to the sender's computing device, a result of the electronic transaction indicating that the electronic transaction has been completed with no refund.

In a single-charge approach, the processing of the electronic transaction may include, in case of having determined that reduction is applicable, performing by or via the support application, a charge of the total amount minus the determined reduction on the sender's payment source based on the payment source's attributes or, in case of having determined that no reduction is applicable, performing by or via the support application, a charge of the total amount on the sender's payment source based on the payment source's attributes.

According to the single-charge approach, the processing of the electronic transaction may include a no-reduction notification functionality or a partial-reduction notification functionality or a full-reduction notification functionality.

The no-reduction notification functionality may include, in case that the charged amount is equal to the total amount, transmitting by or via the support application to the sender's computing device, a result of the electronic transaction indicating that the electronic transaction has been completed with no reduction.

The partial-reduction notification functionality may include, in case that the charged amount is below the total amount, transmitting by or via the support application to the sender's computing device, a result of the electronic transaction indicating that the electronic transaction has been completed with partial reduction.

The full-reduction notification functionality may include, in case of having performed no charge, transmitting by or via the support application to the sender's computing device, a result of the electronic transaction indicating that the electronic transaction has been completed with full reduction.

In a still furthermore aspect, systems are provided for completing an electronic transaction initiated at a computing device, the electronic transaction being from a sender using or having the computing device to a receiver using or having a computer system communicatively coupled or couplable with the computing device. The electronic transaction has one or more transaction conditions. Such systems (also denominated completing systems herein) comprise a receiver module and an effecting module. The receiver module is configured to perform the receiving functionality as previously defined in relation to completing methods. The effecting module is configured to perform the effecting functionality as previously defined in relation to completing methods. In some examples, the support application may be or may be included in one of the completing systems disclosed herein.

Completing systems are suitable or configured to perform completing methods described in other parts of the disclosure, so same or similar functional principles and advantages as the ones described with reference to completing methods may be similarly attributed to such completing systems.

In a yet furthermore aspect, computer programs are provided comprising computer program code means adapted to perform all the steps of (completing) methods of completing an electronic transaction initiated at a computing device, such as those described in other parts of the disclosure. These computer programs (also denominated completing computer programs herein) may be embodied on a computer readable medium and/or carried on a carrier signal. Completing computer programs are suitable or configured to perform completing methods proposed herein, so same or similar functional fundamentals and advantages as the ones described with reference to completing methods may be similarly attributed to such completing computer programs. In some implementations, the support application may be or may be included in one of the completing computer programs disclosed herein.

In an additional aspect, computing systems are provided for completing an electronic transaction initiated at a computing device, said computing systems comprising a memory and a processor, embodying instructions stored in the memory and executable by the processor, and the instructions comprising functionality or functionalities to execute (completing) methods of completing an electronic transaction initiated at a computing device such as those described in other parts of the disclosure. Such computing systems (also denominated completing computing systems herein) are suitable or configured to perform completing methods described herein, so same or similar functional principles and advantages as the ones described with reference to completing methods may be similarly attributed to such completing computing systems. In some configurations, the support application may be or may be included in one of the completing computing systems disclosed herein.

### BRIEF DESCRIPTION OF THE DRAWINGS

Non-limiting examples of the disclosure will be described in the following, with reference to the appended drawings, in which:
Figure 1 is a block diagram schematically illustrating (initiating) systems for initiating an electronic transaction, according to examples.
Figure 2 is a flow chart schematically illustrating (initiating) methods of initiating an electronic transaction, according to examples.
Figure 3 is a block diagram schematically illustrating (completing) systems for completing an electronic transaction initiated at an initiating system such as the ones of Figure 1, according to examples.
Figure 4 is a flow chart schematically illustrating (completing) methods of completing an electronic transaction initiated by an initiating method such as the ones of Figure 2, according to examples.

### DETAILED DESCRIPTION OF EXAMPLES

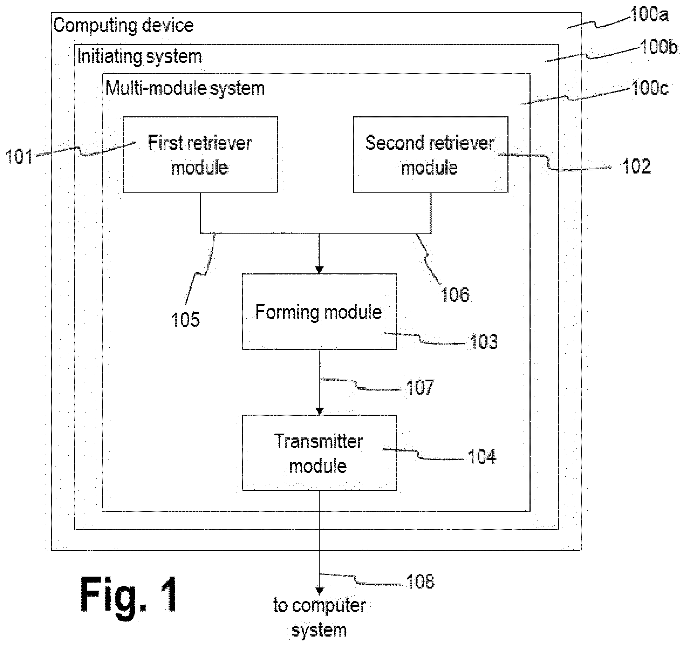

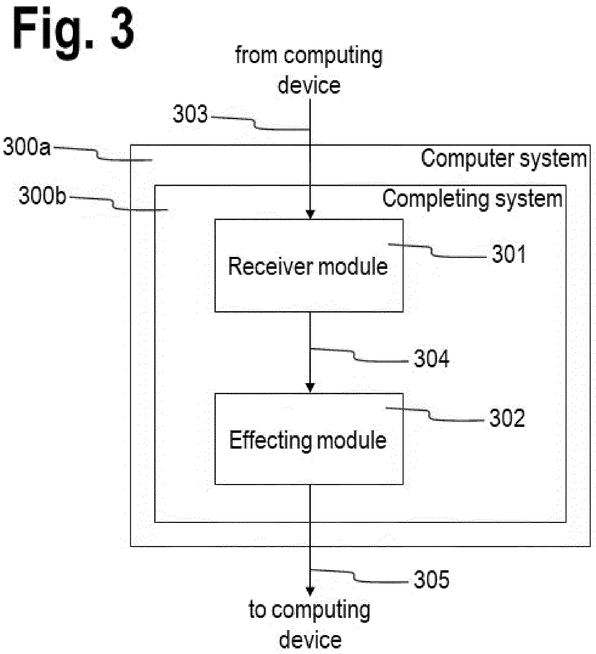

Figure 1 is a block diagram schematically illustrating (initiating) systems 100b for initiating an electronic transaction 108 at a computing device 100a, according to examples. The electronic transaction 108 may be from a sender using the computing device 100a to a receiver using a computer system 300a (see Figure 3) communicatively coupled or couplable with the computing device 100a. The electronic transaction 108 may have one or more transaction conditions. The initiating system 100b may comprise a multi-module system 100c which may include a first retriever module 101, a second retriever module 102, a forming module 103 and a transmitter module 104. Such modules 101 - 104 in the multi-module system 100c may cooperate together to perform the multi-step procedure described in other parts of the present disclosure.

The first retriever module 101 may be configured to retrieve verifiable data or attributes of the sender from a first electronic storage in the computing device, said sender's verifiable data corresponding to identity attributes of the sender (first retrieving functionality). Once retrieved, the sender's verifiable data 105 may be provided to the forming module 103.

The second retriever module 102 may be configured to retrieve verifiable data or attributes of a payment source of the sender from a second electronic storage in the computing device, said payment source's verifiable data corresponding to attributes of the sender's payment source (second retrieving functionality). Once retrieved, the sender's verifiable data 105 may be provided to the forming module 103. Once retrieved, the payment source's verifiable data 106 may be provided to the forming module 103.

The forming module 103 may be configured to form a data structure including or representing at least part of the retrieved sender's verifiable data and the retrieved payment source's verifiable data (forming functionality). Once formed, the data structure 107 may be provided to the transmitter module 104.

The transmitter module 104 may be configured to perform a one-shot transmission 108 of the data structure (transmitting functionality) to the receiver's computer system 300a to automatically complete the initiated electronic transaction, at or via the receiver's computer system 300a, depending on the payment source's attributes and on whether and which of the transaction conditions are fulfilled by the sender's identity attributes.

The initiating system 100b may further include a pre-handler module (not shown) configured to pre-handle some actions prior to cause activation of the multi-module system 100c to perform the multi-step procedure. Such a pre-handling may include, e.g., receiving a start request from the receiver's computer system 300a and, in said case, causing activation of the multi-module system 100c in response to the receiving of the start request. The pre-handling may further include receiving sender's input or action to accept the start request and, in said case, causing activation of the multi-module system 100c in response to the receiving of the start request and its acceptance by the sender. Such an acceptance may be or may include, e.g., authentication by the sender in the service application (e.g., e-wallet application).

The start request (from the computer system 300a) may include parameters of the electronic transaction which may be displayed or displayable at the sender's computing device 100a in either only-accept mode or select-update mode or non-update-preselect mode or update-preselect mode. Since said three modes and their implementation are properly described in other parts of the disclosure, said description is not repeated here.

The electronic transaction's parameters may be encoded in a one-dimensional (1D) or two-dimensional (2D) bar code included in the start request. Since said bar code based approaches are accurately described in other parts of the disclosure, this description is not replicated at this point.

Initiating systems 100b may be or may include or may functionally behave equally or similarly as the service application described in different parts of the present disclosure. In some examples, the service application may be or may include or may be implemented in the form of an e-wallet application or according to e-wallet standards or specifications. Since this e-wallet based approach is well described in other parts of the disclosure, such a description is not repeated here.

As commented in other parts of the disclosure, the sender's verifiable data may be or may include sender's verifiable credentials corresponding to the sender's identity attributes, and/or the payment source's verifiable data may be or may include payment source's verifiable credentials corresponding to the payment source's attributes.

The sender's identity attributes may comprise simple identity attributes and complex identity attributes. The concept of simple identity attribute and the concept of complex identity attribute are appropriately defined in other parts of the disclosure and, therefore, said definitions are not replicated at this point. Simple attributes may be or may include, e.g., age, birth date, ID card number, nationality, membership on an entity (e.g., club, company, organisation, etc.), ownership of something (e.g., electrical vehicle, green real state, etc.), and so on. Complex attributes may be or may include logical compositions involving, e.g., age, age dependent condition, condition fulfilling indicator, etc. An age dependent condition may be defined based on, e.g., an age threshold whose exceedance above or below denotes satisfaction or dissatisfaction of the age dependent condition. Very specific examples thereof may be or include: Age > 13, true/false; Age > 18, true/false; Age > 65, true/false; Age >18 & <35, true/false; etc.

The payment source's attributes may comprise identification attributes and, optionally, authorization attributes. The concept of identification attribute and the concept of authorization attribute are properly defined in other parts of the disclosure and, accordingly, said definitions are not replicated here. Identification attributes may be or may include, e.g., card number, card expiry, card CVV (Card Verification Value) code, issuing bank, banking token or tokens, etc. Banking tokens may be used to tokenize identification attributes based on replacing sensitive data (at least part of the identification attributes) with unique identification symbols (tokens) retaining all essential information about said data without compromising its security. Authorization attributes may be or may include, e.g., maximum charge enabled, maximum number of charges per time period (e.g., day or week), minimum balance allowed after charge, etc.

In a short-range or short-distance or in-store scenario, the sender's computing device 100a and the receiver's computer system 300a may communicate with each other through a short range or short distance wireless communication technology such as, e.g., Bluetooth, infrared, near field communication (NFC), ultra-band, Zigbee. In a remote communication scenario, the sender's computing device 100a and the receiver's computer system 300a may communicate with each other through a mobile or non-mobile communication network such as, .e.g., the Internet or mobile Internet.

In short-distance scenarios based on, e.g., short distance wireless communication (e.g., NFC) or according to bar code based approach (e.g., QR based approach), the sender may configure by default one or more payment sources (i.e., attributes thereof) in its service application (e.g., e-wallet application) installed on its computing device 100a (e.g., smartphone).

In short distance wireless communication implementations, starting by the sender of his/her service application (e.g., e-wallet) and pertinent payment source may enable the service application to display (e.g., if requested by the sender) payment source's attributes and/or sender's identity attributes as previously configured by default. Service application starting functionality may be based on, e.g., a sender's authentication operation. Once started, the service application (e.g., e-wallet) may allow the sender to activate or deactivate sharing of payment source's attributes and/or sender's identity attributes in selective manner for a particular electronic transaction to be initiated. Previous to such a sharing option activation or deactivation, the service application may enable the sender to select which of the payment sources available in the service app will be used. Once the sender has done this or part of this or nothing, he/she may approach his/her computing device 100a to receiver's computer system 300a (e.g., Point of Sale Terminal, POS) to activate short-distance wireless and, therefore, initiate the electronic transaction.

In bar code based (e.g., QR based) implementations, starting by the sender of his/her service application (e.g., e-wallet) and scanning-decoding of the bar code (e.g., via his/her computing device 100a) may enable the service app to display (e.g., if requested by the sender) which payment source's attributes and/or sender's identity attributes are requested by the electronic transaction to be initiated. This displaying may be with sharing option of the required payment source's and/or sender's identity attributes selectively activated or deactivated as preconfigured by the sender in relation to the chosen payment source to be used. In the select-update mode, the service app may allow the sender to modify said preselected sharing option of the required payment source's and/or sender's identity attributes. Once all these pre-handle actions have been performed, the service app may request the sender to accept initiation of the electronic transaction. Such an acceptance operation of initiating the electronic transaction may include, e.g., a sender's authentication operation and, finally, acceptance confirmation to trigger initiation of the transaction.

The aforementioned sender's authentication operations may be based on, e.g., any one of Face ID, double tap, proprietary face biometrics, voice biometrics, fingerprint biometrics, hardware-based authentication (with, e.g., FIDO-compliant devices), something the sender (to be authenticated) knows (like a PIN), etc. or any possible combination thereof. As commented somewhere in this disclosure, the data structure to be one-shot transmitted may be formed (by the service application) further including or representing verifiable data or attributes (e.g., authentication type) on the performed sender's authentication operation(s). This manner, strong customer authentication requirements such as, e.g., those included in the Payment Services Directive (PSD2) may be fulfilled, thereby avoiding request of additional actions by/from the user/sender initiating or trying to initiate the transaction.

Using proprietary biometrics instead of computing device's biometrics also allows, in addition to what has been described before, moving from presumption of attribute(s) ownership to certainty. For example, if age attribute is shared, thanks to these other types of biometrics, it can be verified that said attribute has been attested from identity attributes extracted from an official identity document and/or official registry corresponding to the person (i.e., the sender) who is using the computing device at that time. In the case of, e.g., Face ID is used instead, it may revert to the PIN or it is possible that the computing device is being used by another person different from who has registered their biometrics (i.e., the sender), even if said other person is not the legitimate owner of said attribute(s).

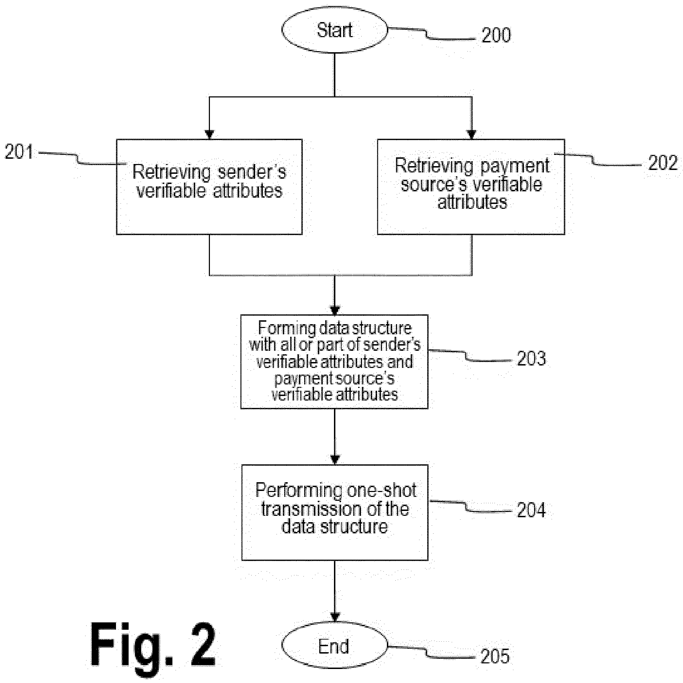

The aforementioned sender's authentication operation(s) may be required and/or performed in any of the suggested short-distance and remote communication scenarios, and the data structure to be one-shot transmitted may be formed further including or representing verifiable data or attributes of the performed authentication. Such verifiable data or attributes of the performed authentication may include, e.g., an indicator of the type of authentication carried out whose possible values may, e.g., be: none, presence-confirmed, device-ownership-confirmed, identity-attributes-ownership-confirmed, etc. Figure 2 is a flow chart schematically illustrating initiating methods of initiating an electronic transaction, according to examples. Since initiating methods according to Figure 2 are performable by or at initiating systems according to Figure 1, number references from said Figure 1 may be reused in following description of Figure 2.

Initiating methods may be started (e.g., at block 200) upon detection of a starting condition such as, e.g., the start request from the receiver's computer system, implementation details of which are provided with reference to Figure 1. This starting (e.g., at block 200) may cause initiation of a multi-step procedure.

The multi-step procedure may include (e.g., at method-block 201) retrieving, by the service application, verifiable data or attributes of the sender from a first electronic storage in the computing device 100a, said sender's verifiable data corresponding to identity attributes of the sender. This retrieving functionality implemented or implementable at method-block 201 may be performed by, e.g., first retriever module 101. Functional details and considerations explained about first retriever module 101 may thus be similarly attributed or attributable to method-block 201.

The multi-step procedure may further include (e.g., at method-block 202) retrieving, by the service application, verifiable data or attributes of a payment source of the sender from a second electronic storage in the computing device 100a, said payment source's verifiable data corresponding to attributes of the sender's payment source. This retrieving functionality implemented or implementable at method-block 202 may be performed by, e.g., second retriever module 102 previously described with reference to Figure 1. Functional details and considerations explained about second retriever module 102 may thus be similarly attributed or attributable to method-block 202.

The multi-step procedure may still further include (e.g., at method-block 203) forming, by the service application, a data structure including or representing at least part of the retrieved sender's verifiable data and the retrieved payment source's verifiable data. This forming functionality implemented or implementable at method-block 203 may be performed by, e.g., forming module 103 previously described with reference to Figure 1. Functional details and considerations explained about forming module 103 may thus be similarly attributed or attributable to method-block 203.

The multi-step procedure may yet further include (e.g., at method-block 204) performing, by the service application, a one-shot transmission of the data structure to the receiver's computer system to automatically complete the initiated electronic transaction, at or via the receiver's computer system, depending on the payment source's attributes and on whether and which of the transaction conditions are fulfilled by the sender's identity attributes. This one-shot transmission functionality implemented or implementable at method-block 204 may be performed by, e.g., transmitter module 104 previously described with reference to Figure 1. Functional details and considerations explained about transmitter module 104 may thus be similarly attributed or attributable to method-block 204.

Initiating methods may further include (e.g., at method-block 205) terminating execution of the initiating method or, in other words, terminating the initiation of the electronic transaction. This termination may be effected by, e.g., checking successful performing of the one-shot transmission as described in detail with reference to Figure 1.

Figure 3 is a block diagram schematically illustrating (completing) systems 300b for completing an electronic transaction initiated at an initiating system 100b such as the ones of Figure 1, according to examples. The electronic transaction may be from a sender using or having the computing device 100a to a receiver using or having a computer system 300a communicatively coupled or couplable with the computing device 100a. The electronic transaction may have one or more transaction conditions. As shown in the figure, completing systems 300b may comprise a receiver module 301 and an effecting module 302.

The receiver module 301 may be configured to receive a one-shot transmission 303 of a data structure including or representing verifiable data or attributes of the sender and verifiable data or attributes of a payment source of the sender, the sender's verifiable data corresponding to identity attributes of the sender and the payment source's verifiable data corresponding to attributes of the sender's payment source.

The effecting module 302 may be configured to process the data structure 304 (from the receiver module 301) to effect the electronic transaction depending on the payment source's attributes (in the data structure 304) and on whether and which of the transaction conditions are fulfilled by the sender's identity attributes (in the data structure 304).

The effecting of the electronic transaction may comprise an evaluation step and a resolution step. The evaluation step may include evaluating whether and which of the transaction conditions are satisfied by the sender's identity attributes, so as to determine whether a reduction is applicable or not applicable to a total amount of the electronic transaction. The resolution step may include, once the evaluation step has been performed, resolving or concluding the electronic transaction according to the total amount with or without reduction as determined in the evaluation step. The evaluation step may further include determining whether the electronic transaction cannot be initiated depending on, e.g., a result of the performed evaluation indicating failed satisfaction of indispensable transaction condition(s) to initiate it.

Completing systems 300b may be or may include or may functionally behave equally or similarly as the support application described in different parts of the present disclosure.

The resolution or conclusion of the electronic transaction may be performed according to the charge-refund approach or the single-charge approach which are functionally specified somewhere in the present disclosure. Accordingly said functional specifications are not reiterated at this point.

In the charge-refund approach, the completion of the electronic transaction may be communicated to sender's computing device 100a according to one of following notification functionalities: full-refund notification, partial-refund notification, no-refund notification. Since functional details on these (full-refund, partial-refund, no-refund) notification functionalities are provided in other parts of the disclosure, said functional details are not restated here.

In electronic transactions including what is known as "pre-authorization" or "pre-auth", a plug and socket combination of initiating method according to charge-refund approach (one of the plug and socket parts) along with completing method (the other of the plug and socket parts) may be used to perform whole electronic transactions of this type.

These kinds of transactions including pre-auth are suitable for many scenarios such as, e.g., in fuel stations when full tank filling is chosen according to sender's membership on, e.g., community of the fuel station. First, the person who wants to fill the tank (sender in initiating methods) may present payment means (payment source's attributes in initiating methods) at a station's terminal (receiver's computer system in initiating methods) before purchasing the fuel. Further to the payment source's attributes, initiating methods according to present disclosure form the data structure to be one-shot transmitted also including sender's identity attributes. One of said identity attributes may be or may represent, e.g., the sender's membership on the community of the fuel station.

Second, the terminal (receiver's computer system in completing methods) may send an authorization request for a predefined amount higher than the expected transaction amount to ensure sufficient funds are available, so that payment means issuer may place a hold on the predefined amount (charged total amount prior to refund, if applicable, in completing methods). This hold ensures the fuel station will receive payment once the final transaction amount is determined.

Third, once tank has been filled, fuel station's terminal/system (receiver's computer system) may determine whether actual amount of the fuel purchase is below the pre-authorized amount (determination of whether reduction is applicable or not in completing methods).

Fourth, once actual transaction amount (total amount with or without reduction) is known, the transaction is completed by adjusting the hold (charged total amount) to match the actual transaction amount, and any difference (if any) is released back to available funds or credit limit (refund of the determined reduction).

Regarding to identity attribute(s) representing some kind of membership, another scenario that may require such a type of identity attribute may refer to an unattended store (e.g., Amazon Go). In this case, the person who wants to purchase whatever may present suitable payment means (payment source's attributes in initiating methods) to pre-authorize a given money amount. Initiating methods proposed herein make possible to further provide simultaneously identity attributes such as, e.g., membership on Amazon and legal age if alcoholic beverages will be purchased, along with the payment source's attribute(s). Therefore, advantages and benefits of the claimed solution are clear.

In the single-charge approach, the completion of the electronic transaction may be communicated to sender's computing device 100a according to one of following notification functionalities: no-reduction notification, partial-reduction notification, full-reduction notification functionality. Since these (no-reduction, partial-reduction, full-reduction) notifications are functionally detailed in other parts of the disclosure, said functional details are not repeated at this point.

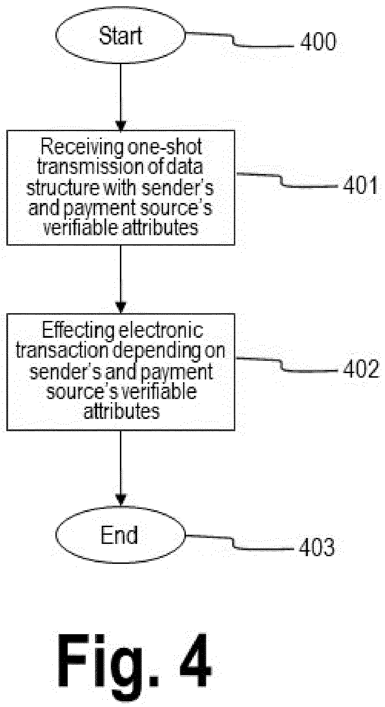

Figure 4 is a flow chart schematically illustrating completing methods of completing an electronic transaction, according to examples. Since completing methods according to Figure 4 are performable by or at completing systems according to Figure 3, number references from said Figure 3 may be reused in following description of Figure 4.

Completing methods may be initiated (e.g., at block 400) upon detection of a starting condition such as, e.g., reception of the one-shot transmission from the sender's computing device, implementation details of which are provided with reference to Figure 3.

Completing methods may further include (e.g., at method-block 401) receiving, by the support application from the sender's computing device, a one-shot transmission of a data structure including or representing verifiable data or attributes of the sender and verifiable data or attributes of a payment source of the sender, the sender's verifiable data corresponding to identity attributes of the sender and the payment source's verifiable data corresponding to attributes of the sender's payment source. This receiving functionality implemented or implementable at method-block 401 may be performed by, e.g., receiver module 301. Functional details and considerations explained about receiver module 301 may thus be similarly attributed or attributable to method-block 401.

Completing methods may still further include (e.g., at method-block 402) effecting the electronic transaction, by or via the support application, depending on the payment source's attributes and on whether and which of the transaction conditions are fulfilled by the sender's identity attributes. This effecting functionality implemented or implementable at method-block 402 may be performed by, e.g., effecting module 302 previously described with reference to Figure 3. Functional details and considerations explained about effecting module 302 may thus be similarly attributed or attributable to method-block 402.

Completing methods may yet further include (e.g., at method-block 403) terminating execution of the completing method or, in other words, terminating the electronic transaction. This termination may be effected by, e.g., sending from the computer system to the computing device a notification including a result of the completed electronic transaction, as described in detail with reference to Figure 3.

As used herein, the term "module" may be understood to refer to software, firmware, hardware and/or various combinations thereof. It is noted that the modules are exemplary.

The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding initiating systems and/or completing systems proposed herein, and/or to other components that may be local or remote to one another. Additionally, the modules may be moved from one device and added to another device, and/or may be included in both devices, associated to corresponding initiating systems and/or completing systems proposed herein. Any software implementations may be tangibly embodied in one or more storage media, such as, e.g., a memory device, a floppy disk, a compact disk (CD), a digital versatile disk (DVD), or other devices that may store computer code.

Initiating systems and/or completing systems according to present disclosure may be implemented by computing means, electronic means or a combination thereof. The computing means may be a set of instructions (e.g., a computer program) and then initiating systems and/or completing systems may comprise a memory and a processor, embodying said set of instructions stored in the memory and executable by the processor. These instructions may comprise functionality or functionalities to execute corresponding initiating methods and/or completing methods such as those described in other parts of the disclosure.

In initiating systems and/or completing systems implemented only by electronic means, a controller of the system may be, for example, a CPLD (Complex Programmable Logic Device), an FPGA (Field Programmable Gate Array) or an ASIC (Application-Specific Integrated Circuit).

In initiating systems and/or completing systems that are a combination of electronic and computing means, the computing means may be a set of instructions (e.g., a computer program) and the electronic means may be any electronic circuit capable of implementing corresponding steps of initiating methods and/or completing methods proposed herein, such as those described in other parts of the disclosure.

The computer program(s) may be embodied in/on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing initiating methods and/or completing methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, initiating methods and/or completing methods proposed herein.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. Method of initiating an electronic transaction at a computing device, from a sender using or having the computing device to a receiver using or having a computer system communicatively coupled or couplable with the computing device, the electronic transaction having one or more transaction conditions, the computing device having a service application installed thereon, and the method comprising a multi-step procedure including:
retrieving, by the service application, verifiable data or attributes of the sender from a first electronic storage in the computing device, said sender's verifiable data corresponding to identity attributes of the sender;
retrieving, by the service application, verifiable data or attributes of a payment source of the sender from a second electronic storage in the computing device, said payment source's verifiable data corresponding to attributes of the sender's payment source;
forming, by the service application, a data structure including or representing at least part of the retrieved sender's verifiable data and the retrieved payment source's verifiable data; and
performing, by the service application, a one-shot transmission of the data structure to the receiver's computer system to automatically complete the initiated electronic transaction, at or via the receiver's computer system, depending on the payment source's attributes and on whether and which of the transaction conditions are fulfilled by the sender's identity attributes; wherein
the first electronic storage and the second electronic storage are not included in the service application.

2. Method of initiating an electronic transaction according to claim 1, further comprising receiving, by the service application, a start request from the receiver's computer system and, in response thereto, initiating the multi-step procedure.

3. Method of initiating an electronic transaction according to claim 2, further comprising receiving, by the service application, sender's input or action to accept the start request and initiating the multi-step procedure in response to said receiving of the start request and its acceptance by the sender.

4. Method of initiating an electronic transaction according to claim 3, wherein the start request includes a type of authentication to be performed by the sender at the computing device; wherein
the sender's input or action to accept the start request includes performing by the sender said type of authentication; and wherein
the forming of the data structure comprises forming, by the service application, the data structure further including or representing verifiable data on the authentication performed by the sender.

5. Method of initiating an electronic transaction according to any of claims 1 to 4, wherein the service application in the sender's computing device is a wallet application including, or being connected with, the first electronic storage and the second electronic storage.

6. Method of initiating an electronic transaction according to any of claims 1 to 5, wherein the sender's verifiable data are or include sender's verifiable credentials corresponding to the sender's identity attributes; and wherein the payment source's verifiable data are or include payment source's verifiable credentials corresponding to the payment source's attributes.

7. Method of initiating an electronic transaction according to any of claims 1 to 6, wherein the sender's identity attributes comprise
simple identity attributes each denoting or representing a single personal feature characterizing or contributing to characterize the sender's identity, and/or
complex identity attributes each being or including a composition of logically related items characterizing or contributing to characterize the sender's identity, each of said items being a simple identity attribute or a threshold or a nested complex identity attribute or any personal condition characterizing or contributing to characterize the sender's identity.

8. Method of initiating an electronic transaction according to any of claims 1 to 7, wherein the payment source's attributes comprise identification attributes identifying or contributing to identify the payment source, so that the effecting of the electronic transaction is performable directly or indirectly against the payment source through its identification attributes.

9. Method of initiating an electronic transaction according to any of claims 1 to 8, wherein the payment source's attributes comprise authorization attributes defining or contributing to define authorization to directly or indirectly operate the payment source under predefined conditions, so that the effecting of the electronic transaction is performable directly or indirectly against the payment source restricted to said predefined conditions.

10. Method of initiating an electronic transaction according to any of claims 1 to 9, wherein, in a short-range or short-distance or in-store scenario, the sender's computing device and the receiver's computer system are communicatively couplable with each other through a short range or short distance wireless communication technology, so that any data exchange between the sender's computing device and the receiver's computer system is performed through said short range or short distance wireless communication technology.

11. Method of initiating an electronic transaction according to any of claims 1 to 10, wherein, in a remote communication scenario, the sender's computing device and the receiver's computer system are communicatively coupled or couplable with each other through a mobile or non-mobile communication network.

12. Computer program product comprising computer program code means adapted to perform all the steps of the method according to any of claims 1 to 11 when said program is run on a computer.

13. System for initiating an electronic transaction at a computing device, from a sender using or having the computing device to a receiver using or having a computer system communicatively coupled or couplable with the computing device, the electronic transaction having one or more transaction conditions, and the system comprising a multi-module system including:
a first retriever module configured to retrieve verifiable data or attributes of the sender from a first electronic storage in the computing device, said sender's verifiable data corresponding to identity attributes of the sender;
a second retriever module configured to retrieve verifiable data or attributes of a payment source of the sender from a second electronic storage in the computing device, said payment source's verifiable data corresponding to attributes of the sender's payment source;
a forming module configured to form a data structure including or representing at least part of the retrieved sender's verifiable data and the retrieved payment source's verifiable data; and
a transmitter module configured to perform a one-shot transmission of the data structure to the receiver's computer system to automatically complete the initiated electronic transaction, at or via the receiver's computer system, depending on the payment source's attributes and on whether and which of the transaction conditions are fulfilled by the sender's identity attributes; wherein
the first electronic storage and the second electronic storage are not included in the service application.

14. Method of completing an electronic transaction initiated at a computing device, the electronic transaction being from a sender using or having the computing device to a receiver using or having a computer system communicatively coupled or couplable with the computing device, the electronic transaction having one or more transaction conditions, the computer system having a support application installed thereon, and the method comprising:
receiving, by the support application from a service application of the sender's computing device, a one-shot transmission of a data structure including or representing verifiable data or attributes of the sender and verifiable data or attributes of a payment source of the sender, the sender's verifiable data corresponding to identity attributes of the sender and the payment source's verifiable data corresponding to attributes of the sender's payment source, the sender's verifiable data or attributes being retrieved from a first electronic storage in the sender's computing device, the payment source's verifiable data or attributes being retrieved from a second electronic storage in the sender's computing device, the first electronic storage and the second electronic storage are not included in the service application; and
effecting the electronic transaction, by or via the support application, depending on the payment source's attributes and on whether and which of the transaction conditions are fulfilled by the sender's identity attributes.

15. System for completing an electronic transaction initiated at a computing device, the electronic transaction being from a sender using or having the computing device to a receiver using or having a computer system communicatively coupled or couplable with the computing device, the electronic transaction having one or more transaction conditions, and the system comprising:
a receiver module configured to receive from a service application of the sender's computing device a one-shot transmission of a data structure including or representing verifiable data or attributes of the sender and verifiable data or attributes of a payment source of the sender, the sender's verifiable data corresponding to identity attributes of the sender and the payment source's verifiable data corresponding to attributes of the sender's payment source, the sender's verifiable data or attributes being retrieved from a first electronic storage in the sender's computing device, the payment source's verifiable data or attributes being retrieved from a second electronic storage in the sender's computing device, the first electronic storage and the second electronic storage are not included in the service application; and
an effecting module configured to effect the electronic transaction depending on the payment source's attributes and on whether and which of the transaction conditions are fulfilled by the sender's identity attributes.

## Patentansprüche

1. Verfahren zum Einleiten einer elektronischen Transaktion an einem Computergerät von einem Absender, der das Computergerät verwendet oder hat, zu einem Empfänger, der ein Computersystem verwendet oder hat, das kommunikativ mit dem Computergerät gekoppelt ist oder gekoppelt werden kann, wobei die elektronische Transaktion eine oder mehrere Transaktionsbedingungen hat, auf dem Computergerät eine Dienstanwendung installiert ist und das Verfahren ein mehrstufiges Verfahren umfasst, das Folgendes beinhaltet:
abrufen von verifizierbaren Daten oder Attributen des Absenders durch die Dienstanwendung aus einem ersten elektronischen Speicher in dem Computergerät, wobei die verifizierbaren Daten des Absenders Identitätsattributen des Absenders entsprechen;
abrufen von verifizierbaren Daten oder Attributen einer Zahlungsquelle des Absenders durch die Dienstanwendung aus einem zweiten elektronischen Speicher in dem Computergerät, wobei die verifizierbaren Daten der Zahlungsquelle Attributen der Zahlungsquelle des Absenders entsprechen;
bilden von einer Datenstruktur durch die Dienstanwendung, die mindestens einen Teil der abgerufenen verifizierbaren Daten des Absenders und der abgerufenen verifizierbaren Daten der Zahlungsquelle enthält oder darstellt; und
durchführen von einer einmaligen Übertragung der Datenstruktur durch die Dienstanwendung an das Computersystem des Empfängers, um die eingeleitete elektronische Transaktion automatisch an oder über das Computersystem des Empfängers abzuschließen, abhängig von den Attributen der Zahlungsquelle und davon, ob und welche der Transaktionsbedingungen durch die Identitätsattribute des Absenders erfüllt werden; wobei
der erste elektronische Speicher und der zweite elektronische Speicher nicht in der Dienstanwendung enthalten sind.

2. Das Verfahren zum Einleiten einer elektronischen Transaktion nach Anspruch 1, ferner umfassend das Empfangen einer Startanforderung von dem Computersystem des Empfängers durch die Dienstanwendung und als Reaktion darauf das Einleiten des mehrstufigen Verfahrens.

3. Das Verfahren zum Einleiten einer elektronischen Transaktion nach Anspruch 2, ferner umfassend das Empfangen der Eingabe oder Handlung des Absenders durch die Dienstanwendung, um die Startanforderung zu akzeptieren, und Einleiten des mehrstufigen Verfahrens als Reaktion auf das Empfangen der Startanforderung und deren Annahme durch den Absender.

4. Verfahren zum Einleiten einer elektronischen Transaktion nach Anspruch 3, wobei die Startanforderung eine Art von Authentifizierung beinhaltet, die von dem Absender an dem Computergerät durchzuführen ist; wobei
die Eingabe oder Handlung des Absenders zur Annahme der Startanforderung die Durchführung der genannten Art der Authentifizierung durch den Absender umfasst; und wobei
das Bilden der Datenstruktur das Bilden der Datenstruktur durch die Dienstanwendung umfasst, die ferner verifizierbare Daten über die durch den Absender durchgeführte Authentifizierung beinhaltet oder darstellt.

5. Verfahren zum Einleiten einer elektronischen Transaktion nach einem der Ansprüche 1 bis 4, wobei die Dienstanwendung in der Computervorrichtung des Absenders eine Wallet-Anwendung ist, die den ersten elektronischen Speicher und den zweiten elektronischen Speicher beinhaltet oder damit verbunden ist.

6. Verfahren zum Einleiten einer elektronischen Transaktion nach einem der Ansprüche 1 bis 5, wobei die verifizierbaren Daten des Absenders verifizierbare Berechtigungsnachweise des Absenders sind oder beinhalten, die den Identitätsattributen des Absenders entsprechen; und wobei die verifizierbaren Daten der Zahlungsquelle verifizierbare Berechtigungsnachweise der Zahlungsquelle sind oder beinhalten, die den Attributen der Zahlungsquelle entsprechen.

7. Verfahren zum Einleiten einer elektronischen Transaktion nach einem der Ansprüche 1 bis 6, wobei die Identitätsattribute des Absenders Folgendes umfassen:
einfache Identitätsattribute, die jeweils ein einzelnes persönliches Merkmal bezeichnen oder darstellen, das die Identität des Absenders charakterisiert oder dazu beiträgt, und/oder
komplexe Identitätsattribute, die jeweils eine Zusammensetzung von logisch verwandten Elementen sind oder beinhalten, die die Identität des Absenders charakterisieren oder dazu beitragen, die Identität des Absenders zu charakterisieren, wobei jedes der Elemente ein einfaches Identitätsattribut oder ein Schwellenwert oder ein verschachteltes komplexes Identitätsattribut oder ein beliebiger persönlicher Zustand ist, der die Identität des Absenders charakterisiert oder dazu beiträgt, die Identität des Absenders zu charakterisieren.

8. Verfahren zum Einleiten einer elektronischen Transaktion nach einem der Ansprüche 1 bis 7, wobei die Attribute der Zahlungsquelle Identifikationsattribute umfassen, die die Zahlungsquelle identifizieren oder dazu beitragen, die Zahlungsquelle zu identifizieren, so dass das Ausführen der elektronischen Transaktion direkt oder indirekt gegen die Zahlungsquelle durch ihre Identifikationsattribute durchgeführt werden kann.

9. Verfahren zum Einleiten einer elektronischen Transaktion nach einem der Ansprüche 1 bis 8, wobei die Attribute der Zahlungsquelle Autorisierungsattribute umfassen, die eine Autorisierung definieren oder dazu beitragen, eine Autorisierung zu definieren, um die Zahlungsquelle direkt oder indirekt unter vordefinierten Bedingungen zu betreiben, so dass das Ausführen der elektronischen Transaktion direkt oder indirekt gegen die Zahlungsquelle unter Einschränkung auf die vordefinierten Bedingungen durchgeführt werden kann.

10. Verfahren zum Einleiten einer elektronischen Transaktion nach einem der Ansprüche 1 bis 9, wobei in einem Kurzstrecken- oder Kurzweg- oder In-Store-Szenario die Rechenvorrichtung des Absenders und das Computersystem des Empfängers durch eine Kurzstrecken- oder Kurzweg-Drahtloskommunikationstechnologie kommunikativ miteinander gekoppelt werden können, so dass ein Datenaustausch zwischen dem Computergerät des Absenders und dem Computersystem des Empfängers durch die Kurzstrecken- oder Kurzweg-Drahtloskommunikationstechnologie durchgeführt wird.

11. Verfahren zum Einleiten einer elektronischen Transaktion nach einem der Ansprüche 1 bis 10, wobei in einem Fernkommunikationsszenario die Computervorrichtung des Absenders und das Computersystem des Empfängers über ein mobiles oder nichtmobiles Kommunikationsnetz kommunikativ miteinander gekoppelt sind oder gekoppelt werden können.

12. Computerprogrammprodukt umfassend ein Computerprogrammcodemittel, das dazu ausgelegt sind, alle Schritte des Verfahrens nach einem der Ansprüche 1 bis 11 durchzuführen, wenn das Programm auf einem Computer ausgeführt wird.

13. System zum Einleiten einer elektronischen Transaktion an einem Computergerät von einem Absender, der das Computergerät verwendet oder hat, zu einem Empfänger, der ein Computersystem verwendet oder hat, das kommunikativ mit dem Computergerät gekoppelt ist oder koppelbar werden kann, wobei die elektronische Transaktion eine oder mehrere Transaktionsbedingungen hat und das System ein Multimodulsystem umfasst, das Folgendes beinhaltet:
ein erstes Abrufmodul, das dazu konfiguriert ist, verifizierbare Daten oder Attribute des Absenders aus einem ersten elektronischen Speicher in dem Computergerät abzurufen, wobei die verifizierbaren Daten des Absenders Identitätsattributen des Absenders entsprechen;
ein zweites Abrufmodul, das dazu konfiguriert ist, verifizierbare Daten oder Attribute einer Zahlungsquelle des Absenders aus einem zweiten elektronischen Speicher in dem Computergerät abzurufen, wobei die verifizierbaren Daten der Zahlungsquelle Attributen der Zahlungsquelle des Absenders entsprechen;
ein Bildungsmodul, das dazu konfiguriert ist, eine Datenstruktur zu bilden, die mindestens einen Teil der abgerufenen verifizierbaren Daten des Absenders und der abgerufenen verifizierbaren Daten der Zahlungsquelle beinhaltet oder darstellt; und
ein Sendemodul, das dazu konfiguriert ist, eine einmalige Übertragung der Datenstruktur an das Computersystem des Empfängers durchzuführen, um die eingeleitete elektronische Transaktion automatisch an oder über das Computersystem des Empfängers abzuschließen, abhängig von den Attributen der Zahlungsquelle und davon, ob und welche der Transaktionsbedingungen durch die Identitätsattribute des Absenders erfüllt werden; wobei
der erste elektronische Speicher und der zweite elektronische Speicher nicht in der Dienstanwendung enthalten sind.

14. Verfahren zum Abschließen einer elektronischen Transaktion, die an einer Rechenvorrichtung eingeleitet wurde, wobei die elektronische Transaktion von einem Absender, der die Rechenvorrichtung verwendet oder hat, zu einem Empfänger erfolgt, der ein Computersystem verwendet oder hat, das kommunikativ mit dem Computergerät gekoppelt ist oder gekoppelt werden kann, wobei die elektronische Transaktion eine oder mehrere Transaktionsbedingungen hat, wobei auf dem Computersystem eine Unterstützungsanwendung installiert ist, und wobei das Verfahren Folgendes umfasst:
empfangen einer einmaligen Übertragung einer Datenstruktur, die verifizierbare Daten oder Attribute des Absenders und verifizierbare Daten oder Attribute einer Zahlungsquelle des Absenders enthält oder darstellt, wobei die verifizierbaren Daten des Absenders den Identitätsattributen des Absenders entsprechen und die verifizierbaren Daten der Zahlungsquelle den Attributen der Zahlungsquelle des Absenders entsprechen, durch die Unterstützungsanwendung, wobei die verifizierbaren Daten oder Attribute des Absenders aus einem ersten elektronischen Speicher in dem Computergerät des Absenders abgerufen werden, wobei die verifizierbaren Daten oder Attribute der Zahlungsquelle aus einem zweiten elektronischen Speicher in dem Computergerät des Absenders abgerufen werden, wobei der erste elektronische Speicher und der zweite elektronische Speicher nicht in der Dienstanwendung enthalten sind; und
ausführen der elektronischen Transaktion durch oder über die Unterstützungsanwendung, abhängig von den Attributen der Zahlungsquelle und davon, ob und welche der Transaktionsbedingungen durch die Identitätsattribute des Absenders erfüllt werden.

15. System zum Abschließen einer elektronischen Transaktion, die an einer Rechenvorrichtung eingeleitet wurde, wobei die elektronische Transaktion von einem Absender, der die Rechenvorrichtung verwendet oder hat, zu einem Empfänger, der ein Computersystem verwendet oder hat, das kommunikativ mit dem Computergerät gekoppelt ist oder gekoppelt werden kann, erfolgt, wobei die elektronische Transaktion eine oder mehrere Transaktionsbedingungen hat und das System Folgendes umfasst:
ein Empfängermodul, das dazu konfiguriert ist, von einer Dienstanwendung der Computervorrichtung des Absenders eine einmalige Übertragung einer Datenstruktur zu empfangen, die verifizierbare Daten oder Attribute des Absenders und verifizierbare Daten oder Attribute einer Zahlungsquelle des Absenders enthält oder darstellt, wobei die verifizierbaren Daten des Absenders Identitätsattributen des Absenders und die verifizierbaren Daten der Zahlungsquelle Attributen der Zahlungsquelle entsprechen, wobei die verifizierbaren Daten oder Attribute des Absenders aus einem ersten elektronischen Speicher in der Computervorrichtung des Absenders abgerufen werden, wobei die verifizierbaren Daten oder Attribute der Zahlungsquelle aus einem zweiten elektronischen Speicher in der Computervorrichtung des Absenders abgerufen werden, wobei der erste elektronische Speicher und der zweite elektronische Speicher nicht in der Dienstanwendung enthalten sind; und
ein Ausführungsmodul, das dazu konfiguriert ist, die elektronische Transaktion in Abhängigkeit von den Attributen der Zahlungsquelle und davon, ob und welche der Transaktionsbedingungen durch die Identitätsattribute des Absenders erfüllt werden, auszuführen.

## Revendications

1. Procédé d'initiation d'une transaction électronique au niveau d'un dispositif informatique, d'un expéditeur utilisant ou ayant le dispositif informatique à un récepteur utilisant ou ayant un système informatique couplé ou pouvant être couplé en communication avec le dispositif informatique, la transaction électronique ayant une ou plusieurs conditions de transaction, le dispositif informatique ayant une application de service installée sur celui-ci, et le procédé comprenant une procédure en plusieurs étapes comprenant :
récupérer, par l'application de service, des données ou des attributs vérifiables de l'expéditeur à partir d'une première mémoire électronique dans le dispositif informatique, lesdites données vérifiables de l'expéditeur correspondant aux attributs d'identité de l'expéditeur ;
récupérer, par l'application de service, des données ou des attributs vérifiables d'une source de paiement de l'expéditeur à partir d'une seconde mémoire électronique dans le dispositif informatique, lesdites données vérifiables de la source de paiement correspondant aux attributs de la source de paiement de l'expéditeur ;
former, par l'application de service, une structure de données comprenant ou représentant au moins une partie des données vérifiables de l'expéditeur récupérées et des données vérifiables de la source de paiement récupérées ; et
effectuer, par l'application de service, une transmission ponctuelle de la structure de données au système informatique du destinataire pour mener à bien automatiquement la transaction électronique initiée, au niveau du ou via le système informatique du destinataire, en fonction des attributs de la source de paiement et selon si et lesquelles des conditions de transaction sont remplies par les attributs d'identité de l'expéditeur ; dans lequel
la première mémoire électronique et la seconde mémoire électronique ne sont pas incluses dans l'application de service.

2. Procédé d'initiation d'une transaction électronique selon la revendication 1, comprenant en outre la réception, par l'application de service, d'une demande de démarrage du système informatique du destinataire et, en réponse à celle-ci, l'initiation de la procédure en plusieurs étapes.

3. Procédé d'initiation d'une transaction électronique selon la revendication 2, comprenant en outre la réception, par l'application de service, de l'entrée ou de l'action de l'expéditeur pour accepter la demande de démarrage et l'initiation de la procédure en plusieurs étapes en réponse à ladite réception de la demande de démarrage et à son acceptation par l'expéditeur.

4. Procédé d'initiation d'une transaction électronique selon la revendication 3, dans lequel la demande de démarrage comprend un type d'authentification à effectuer par l'expéditeur au niveau du dispositif informatique ; dans lequel
l'entrée ou l'action de l'expéditeur pour accepter la demande de démarrage comprend l'exécution par l'expéditeur dudit type d'authentification ; et dans lequel
la formation de la structure de données comprend la formation, par l'application de service, de la structure de données comprenant ou représentant en outre des données vérifiables sur l'authentification effectuée par l'expéditeur.

5. Procédé d'initiation d'une transaction électronique selon l'une quelconque des revendications 1 à 4, dans lequel l'application de service dans le dispositif informatique de l'expéditeur est une application de portefeuille comprenant, ou étant connectée avec, la première mémoire électronique et la seconde mémoire électronique.

6. Procédé d'initiation d'une transaction électronique selon l'une quelconque des revendications 1 à 5, dans lequel les données vérifiables de l'expéditeur sont ou comprennent les informations d'identification vérifiables de l'expéditeur correspondant aux attributs d'identité de l'expéditeur ; et dans lequel les données vérifiables de la source de paiement sont ou comprennent les informations d'identification vérifiables de la source de paiement correspondantes aux attributs de la source de paiement.

7. Procédé d'initiation d'une transaction électronique selon l'une quelconque des revendications 1 à 6, dans lequel les attributs d'identité de l'expéditeur comprennent
des attributs d'identité simples dénotant ou représentant chacun une seule caractéristique personnelle caractérisant ou contribuant à caractériser l'identité de l'expéditeur, et/ou
des attributs d'identité complexes, chacun étant ou comprenant une composition d'éléments logiquement liés caractérisant ou contribuant à caractériser l'identité de l'expéditeur, chacun desdits éléments étant un attribut d'identité simple ou un seuil ou un attribut d'identité complexe imbriqué ou toute condition personnelle caractérisant ou contribuant à caractériser l'identité de l'expéditeur.

8. Procédé d'initiation d'une transaction électronique selon l'une quelconque des revendications 1 à 7, dans lequel les attributs de la source de paiement comprennent des attributs d'identification identifiant ou contribuant à identifier la source de paiement, de sorte que la mise en œuvre de la transaction électronique peut être effectuée directement ou indirectement contre la source de paiement par le biais de ses attributs d'identification.

9. Procédé d'initiation d'une transaction électronique selon l'une quelconque des revendications 1 à 8, dans lequel les attributs de la source de paiement comprennent des attributs d'autorisation définissant ou contribuant à définir l'autorisation d'exploiter directement ou indirectement la source de paiement sous des conditions prédéfinies, de sorte que la mise en œuvre de la transaction électronique peut être effectuée directement ou indirectement contre la source de paiement limitée auxdites conditions prédéfinies.

10. Procédé d'initiation d'une transaction électronique selon l'une quelconque des revendications 1 à 9, dans lequel, dans un scénario à courte portée ou à courte distance ou en magasin, le dispositif informatique de l'expéditeur et le système informatique du destinataire peuvent être couplés en communication l'un avec l'autre par l'intermédiaire d'une technologie de communication sans fil à courte portée ou à courte distance, de sorte que tout échange de données entre le dispositif informatique de l'expéditeur et le système informatique du destinataire est effectué par l'intermédiaire de ladite technologie de communication sans fil à courte portée ou à courte distance.

11. Procédé d'initiation d'une transaction électronique selon l'une quelconque des revendications 1 à 10, dans lequel, dans un scénario de communication à distance, le dispositif informatique de l'expéditeur et le système informatique du destinataire sont couplés ou peuvent être couplés en communication l'un à l'autre par l'intermédiaire d'un réseau de communication mobile ou non mobile.

12. Produit de programme informatique comprenant un moyen de code de programme informatique adapté pour exécuter toutes les étapes du procédé selon l'une quelconque des revendications 1 à 11 lorsque ledit programme est exécuté sur un ordinateur.

13. Système pour initier une transaction électronique au niveau d'un dispositif informatique, d'un expéditeur utilisant ou ayant le dispositif informatique à un destinataire utilisant ou ayant un système informatique couplé ou pouvant être couplé en communication avec le dispositif informatique, la transaction électronique ayant une ou plusieurs conditions de transaction, et le système comprenant un système multi-module comprenant :
un premier module de récupération configuré pour récupérer des données ou des attributs vérifiables de l'expéditeur à partir d'une première mémoire électronique dans le dispositif informatique, lesdites données vérifiables de l'expéditeur correspondant aux attributs d'identité de l'expéditeur ;
un second module de récupération configuré pour récupérer des données ou des attributs vérifiables d'une source de paiement de l'expéditeur à partir d'une seconde mémoire électronique dans le dispositif informatique, lesdites données vérifiables de la source de paiement correspondant aux attributs de la source de paiement de l'expéditeur ;
un module de formation configuré pour former une structure de données comprenant ou représentant au moins une partie des données vérifiables de l'expéditeur récupérées et des données vérifiables de la source de paiement récupérées ; et
un module émetteur configuré pour effectuer une transmission ponctuelle de la structure de données au système informatique du destinataire afin de mener à bien automatiquement la transaction électronique initiée, au niveau de ou via le système informatique du destinataire, en fonction des attributs de la source de paiement et selon si et lesquelles des conditions de transaction sont remplies par les attributs d'identité de l'expéditeur ; dans lequel
la première mémoire électronique et la seconde mémoire électronique ne sont pas incluses dans l'application de service.

14. Procédé pour mener à bien une transaction électronique initiée au niveau d'un dispositif informatique, la transaction électronique allant d'un expéditeur utilisant ou ayant le dispositif informatique à un destinataire utilisant ou ayant un système informatique couplé ou pouvant être couplé en communication avec le dispositif informatique, la transaction électronique ayant une ou plusieurs conditions de transaction, le système informatique ayant une application de support installée sur celui-ci, et le procédé comprenant :
recevoir, par l'application de support d'une application de service du dispositif informatique de l'expéditeur, une transmission ponctuelle d'une structure de données comprenant ou représentant des données ou des attributs vérifiables de l'expéditeur et des données ou des attributs vérifiables d'une source de paiement de l'expéditeur, les données vérifiables de l'expéditeur correspondant aux attributs d'identité de l'expéditeur et les données vérifiables de la source de paiement correspondant aux attributs de la source de paiement de l'expéditeur, les données ou les attributs vérifiables de l'expéditeur étant récupéré(e)s à partir d'une première mémoire électronique dans le dispositif informatique de l'expéditeur, les données ou les attributs vérifiables de la source de paiement étant récupéré(e)s à partir d'une seconde mémoire électronique dans le dispositif informatique de l'expéditeur, la première mémoire électronique et la seconde mémoire électronique ne sont pas incluses dans l'application de service ; et
mettre en œuvre la transaction électronique, par ou via l'application de support, en fonction des attributs de la source de paiement et selon si et lesquelles des conditions de transaction sont remplies par les attributs d'identité de l'expéditeur.

15. Système pour mener à bien une transaction électronique initiée au niveau d'un dispositif informatique, la transaction électronique provenant d'un expéditeur utilisant ou ayant le dispositif informatique à un récepteur utilisant ou ayant un système informatique couplé ou pouvant être couplé en communication avec le dispositif informatique, la transaction électronique ayant une ou plusieurs conditions de transaction, et le système comprenant :
un module récepteur configuré pour recevoir d'une application de service du dispositif informatique de l'expéditeur une transmission ponctuelle d'une structure de données comprenant ou représentant des données ou des attributs vérifiables de l'expéditeur et des données ou des attributs vérifiables d'une source de paiement de l'expéditeur, les données vérifiables de l'expéditeur correspondant à des attributs d'identité de l'expéditeur et les données vérifiables de la source de paiement correspondant à des attributs de la source de paiement de l'expéditeur, les données ou les attributs vérifiables de l'expéditeur étant récupéré(e)s à partir d'une première mémoire électronique dans le dispositif informatique de l'expéditeur, les données ou les attributs vérifiables de la source de paiement étant récupéré(e)s à partir d'une seconde mémoire électronique dans le dispositif informatique de l'expéditeur, la première mémoire électronique et la seconde mémoire électronique ne sont pas incluses dans l'application de service ; et
un module de mise en œuvre configuré pour mettre en œuvre la transaction électronique en fonction des attributs de la source de paiement et selon si et lesquelles des conditions de transaction sont remplies par les attributs d'identité de l'expéditeur.
